(19) Europäisches Patentamt / European Patent Office / Office européen des brevets

(11) **EP 4 425 597 A1**

(12) **EUROPEAN PATENT APPLICATION**
published in accordance with Art. 153(4) EPC

(43) Date of publication:
**04.09.2024 Bulletin 2024/36**

(21) Application number: **22884906.3**

(22) Date of filing: **11.02.2022**

(51) International Patent Classification (IPC):
*H01M 4/131* (2010.01)   *H01M 4/1315* (2010.01)
*H01M 10/052* (2010.01)

(52) Cooperative Patent Classification (CPC):
Y02E 60/10

(86) International application number:
**PCT/CN2022/075971**

(87) International publication number:
**WO 2023/070989 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2021 PCT/CN2021/126213**

(71) Applicant: **Ningde Amperex Technology Limited
Ningde, Fujian 352100 (CN)**

(72) Inventor: **ZHOU, Molin
Ningde, Fujian 352100 (CN)**

(74) Representative: **Klunker IP
Patentanwälte PartG mbB
Destouchesstraße 68
80796 München (DE)**

(54) **ELECTROCHEMICAL DEVICE AND ELECTRONIC DEVICE COMPRISING SAME**

(57) This application relates to an electrochemical apparatus and an electronic apparatus including the same. This application discloses a lithium-ion secondary battery including a positive electrode, a negative electrode, a separator, and an electrolyte. The positive electrode includes a first positive electrode material and a second positive electrode material. The first positive electrode material has good cycling stability and high initial coulombic efficiency, and the second positive electrode material has a high initial charge specific capacity and low initial coulombic efficiency. This can compensate for the active lithium loss caused by the formation of SEI. The lithium-ion secondary battery provided in this application has advantages of good rate performance and long cycle life.

FIG. 1

**Description**

**TECHNICAL FIELD**

This application relates to the field of energy storage, specifically to an electrochemical apparatus and an electronic apparatus including the same, and in particular to a lithium-ion battery.

**BACKGROUND**

In recent years, with the continuous expansion of the battery industry scale and the development of related technologies, the cycle life of lithium-ion batteries has received increasing attention and challenges. In a first charge and discharge process of lithium-ion secondary batteries, a solid electrolyte interphase (SEI) forms on a surface of a negative electrode, causing irreversible capacity loss. In a lithium-ion energy storage device that uses a graphite negative electrode, about 10% of an active lithium source is consumed in the first cycle. When a negative electrode material with a high specific capacity is used, such as, a negative electrode including alloys (silicon alloy, tin alloy, and the like), oxides (silicon oxide and tin oxide), and amorphous carbon, the active lithium source is further consumed. In addition, in the subsequent cycling procedure, due to the damage and regeneration of the SEI, the active lithium source is further consumed, leading to a shorter cycle life. Therefore, appropriate lithium supplementation methods are of great significance for further prolonging the cycle life of lithium-ion energy storage devices.

SUMMARY

This application provides an electrochemical apparatus and an electronic apparatus, which have improved rate performance and prolonged cycle life, to resolve the problem in the prior art to some extent.

In an embodiment, this application provides an electrochemical apparatus. The electrochemical apparatus includes a positive electrode, a negative electrode, and an electrolyte. The positive electrode includes a positive electrode current collector and a positive electrode material layer on at least one surface of the positive electrode current collector, and the positive electrode material layer includes a first positive electrode material shown in Formula (I):

$$Li_{1+x}Co_yMe_zM_{1-y-z}O_{2-t}A_t \qquad \text{Formula (I),}$$

where -0.1<x<0.2, 0.8<y≤1, 0≤z≤1, 0<y+z≤1, 0≤t<0.2, Me and M each independently include at least one of Ni, Mn, Al, Mg, Ti, Zr, La, or Y, Me is different from M, and A includes at least one of S, N, F, Cl, or Br; and a second positive electrode material shown in Formula (II);

$$Li_{1+r}Mn_{1-p}X_pO_{2-s}T_s \qquad \text{Formula (II),}$$

where -0.1<r<0.2, 0≤p<0.2, 0≤s<0.2, X includes at least one of Fe, Co, Ni, Ti, Zn, Mg, Al, V, Cr, or Zr, and T includes at least one of S, N, F, Cl, or Br; and
the positive electrode satisfies Formula (1):

$$2.0 \leq R \times P/Q \leq 36 \qquad \text{Formula (1),}$$

where R represents a resistance of the positive electrode measured in S2; P represents a compacted density of the positive electrode measured in $g/cm^3$; and Q represents a single-side surface density of the positive electrode measured in $g/1540.25 \ mm^2$.

In some embodiments, the positive electrode satisfies Formula (2):

$$5.0 \leq R \times P/Q \leq 32 \qquad \text{Formula (2).}$$

In some embodiments, R≤3 Ω.

In some embodiments, $4.0 \text{ g/cm}^3 \leq P \leq 4.3 \text{ g/cm}^3$.

In some embodiments, $0.16 \text{ g/1540.25 mm}^2 < Q < 0.38 \text{ g/1540.25 mm}^2$.

In some embodiments, a mass ratio of the first positive electrode material to the second positive electrode material is 5: 1 to 99: 1.

In some embodiments, based on a total mass of the positive electrode material layer, a percentage of the first positive electrode material is 80% to 98%.

In some embodiments, in an X-ray diffraction spectrum, the second positive electrode material has a characteristic diffraction peak A at 15° to 16° and/or a characteristic diffraction peak B at 18° to 19°, and a ratio $I_A/I_B$ of an intensity $I_A$ of the characteristic diffraction peak A to an intensity $I_B$ of the characteristic diffraction peak B satisfies Formula (3):

$$0 < I_A/I_B \leq 0.2 \qquad \text{Formula (3)}.$$

In some embodiments, after the first cycle of charging of the second positive electrode material, in the X-ray diffraction spectrum, the characteristic diffraction peak A and the characteristic diffraction peak B both shift towards lower angles, with a shift magnitude less than 0.5°.

In some embodiments, the first positive electrode material includes at least one of $LiCoO_2$, $LiCo_{0.9}Ni_{0.1}O_2$, $LiCo_{0.9}Ni_{0.05}Mn_{0.05}O_2$, or $Li_{0.95}Co_{0.99}Al_{0.01}O_{1.95}F_{0.05}$; and/or the second positive electrode material includes at least one of $LiMnO_2$, $LiMn_{0.9}Ni_{0.1}O_2$, $LiMn_{0.9}Ni_{0.05}Cr_{0.05}O_2$, $Li_{0.95}MnO_{1.95}F_{0.05}$, or $Li_{0.95}MnO_{1.9}S_{0.05}F_{0.05}$.

In some embodiments, the electrolyte includes fluoroethylene carbonate, where based on a total mass of the electrolyte, a percentage of fluoroethylene carbonate is 1% to 15%.

In another embodiment, this application further provides an electronic apparatus, including the electrochemical apparatus described according to some embodiments of this application.

This application provides a positive electrode including a positive electrode lithium-supplementing material and a lithium-ion secondary battery including the same. First, the second positive electrode material used in this application has a small amount of surface free lithium and good processing performance. In addition, the second positive electrode material has a higher specific capacity than the first positive electrode material and can release a large amount of lithium ions during the first charge to supplement active lithium. Combining the second positive electrode material with the first positive electrode material of a layer-like structure with a high specific capacity can effectively prolong the cycle life of the battery. Second, the design of the sheet resistance, compacted density, and surface density of the positive electrode in this application can significantly improve the cycle life and rate performance of the lithium-ion secondary battery. Third, the additive fluoroethylene carbonate is added into the electrolyte, allowing the negative electrode to form a SEI film that is rich in LiF composition and uniformly dense, thus inhibiting the continuous loss of the active lithium. In addition, the fluoroethylene carbonate is more resistant to high-voltage oxidation on the positive electrode side, which can further prolong the cycle life of the lithium-ion secondary battery.

Additional aspects and advantages of this application are partially described and presented in subsequent descriptions, or explained through implementation of some embodiments of this application.

## BRIEF DESCRIPTION OF DRAWINGS

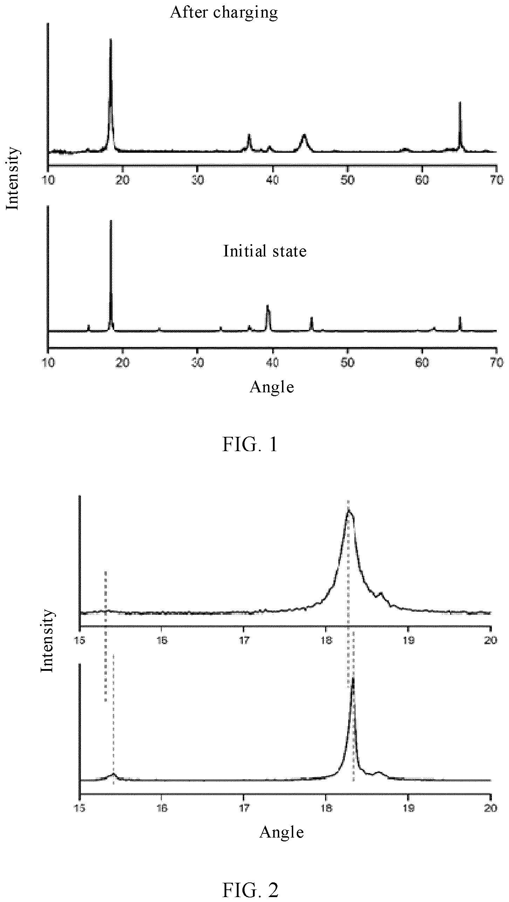

FIG. 1 is XRD patterns before and after a first cycle of charging of a second positive electrode material according to example 1.

FIG. 2 is a locally enlarged view of FIG. 1.

## DESCRIPTION OF EMBODIMENTS

Some embodiments of this application are described in detail below. Some embodiments of this application should not be construed as limitations on the application.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In specific embodiments and claims, a list of items connected by the terms "one of", "one piece of", "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may include a single element or a plurality of elements. The item B may include a single element or a plurality of elements. The item C may include a single element or a plurality of elements.

In the specific embodiments and claims, an item list connected by the terms "at least one of", "at least one piece of", "at least one kind of" or other similar terms may mean any combination of the listed items. For example, if items A and B are listed, the phrase "at least one of A and B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements.

## I. Electrochemical apparatus

In some embodiments, this application provides an electrochemical apparatus. The electrochemical apparatus includes a positive electrode, a negative electrode, and an electrolyte.

## 1. Positive electrode

In some embodiments, the positive electrode includes a positive electrode current collector and a positive electrode material layer on at least one surface of the positive electrode current collector, and the positive electrode material layer includes a first positive electrode material shown in Formula (I):

$$Li_{1+x}Co_yMe_zM_{1-y-z}O_{2-t}A_t \qquad \text{Formula (I),}$$

where $-0.1<x<0.2$, $0.8<y\leq1$, $0\leq z\leq1$, $0<y+z\leq1$, $0\leq t<0.2$, Me and M each independently include at least one of Ni, Mn, Al, Mg, Ti, Zr, La, or Y, Me is different from M, and A includes at least one of S, N, F, Cl, or Br; and
a second positive electrode material shown in Formula (II);

$$Li_{1+r}Mn_{1-p}X_pO_{2-s}T_s \qquad \text{Formula (II),}$$

where $-0.1<r<0.2$, $0\leq p<0.2$, $0\leq s<0.2$, X includes at least one of Fe, Co, Ni, Ti, Zn, Mg, Al, V, Cr, or Zr, and T includes at least one of S, N, F, Cl, or Br; and
the positive electrode satisfies Formula (1):

$$2.0\leq R\times P/Q\leq36 \qquad \text{Formula (1),}$$

where R represents a resistance of the positive electrode measured in $\Omega$; P represents a compacted density of the positive electrode measured in $g/cm^3$; and Q represents a single-side surface density of the positive electrode measured in $g/1540.25\ mm^2$.

In this specification, the calculation of $R\cdot P/Q$ involves only numerical calculation. For example, if the resistance R of the positive electrode is 1.0 $\Omega$, the compacted density P is 4.2 $g/cm^3$, and the single-side surface density Q of the positive electrode is 0.26 $g/1540.25\ mm^2$, $R\ P/Q=16.15$.

The resistance R of the positive electrode is a resistance value measured using the direct-current two-probe method, where a contact area between the probe and the positive electrode is $49\pi\ mm^2$. For example, upper and lower sides of the positive electrode are clamped between two conductive terminals of an electrode plate resistance tester and then fixed by applying pressure. The diameter of the conductive terminals is 14 mm, and the applied pressure is 15 MPa to 27 MPa. The electrode plate resistance tester is a HIOKI BT23562 internal resistance tester.

The compacted density of the positive electrode can be calculated according to a formula: $P=m/v$, where m represents a weight of the positive electrode material layer measured in g; and v represents a volume of the positive electrode material layer measured in $cm^3$. The volume v of the positive electrode material layer may be a product of the area $A_r$ of the positive electrode material layer and the thickness of the positive electrode material layer.

The single-side surface density Q of the positive electrode can be calculated according to a formula: $Q=1540.25\ m/A_r$, where m represents a weight of the positive electrode material layer measured in g; and $A_r$ represents an area of the positive electrode material layer measured in mm$^2$.

In some embodiments, the positive electrode material layer is located on a surface of the positive electrode current collector. In some embodiments, the positive electrode material layer is located on both surfaces of the positive electrode current collector.

In some embodiments, the first positive electrode material includes at least one of $LiCoO_2$, $LiCo_{0.9}Ni_{0.1}O_2$, $LiCo_{0.9}Ni_{0.05}Mn_{0.05}O_2$, or $Li_{0.95}Co_{0.99}Al_{0.01}O_{1.95}F_{0.05}$. In some embodiments, the second positive electrode material includes at least one of $LiMnO_2$, $LiMn_{0.9}Ni_{0.1}O_2$, $LiMn_{0.9}Ni_{0.05}Cr_{0.05}O_2$, $Li_{0.95}MnO_{1.95}F_{0.05}$, or $Li_{0.95}MnO_{1.9}S_{0.05}F_{0.05}$.

In some embodiments, $5.0 \leq R \times P/Q \leq 32$. In some embodiments, a value of $R \times P/Q$ is 5.0, 8, 10, 12, 14, 16, 18, 20, 22, 24, 26, 28, 30, 32, or in a range defined by any two of these values.

In some embodiments, $R \leq 3$ Q. In some embodiments, R is 0.2 S2, 0.5 S2, 1 S2, 1.2 S2, 1.5 S2, 1.8 S2, 2.0 S2, 2.2 S2, 2.5 S2, 3.0 S2, or in a range defined by any two of these values. R being in the foregoing range is conducive to improving the cycling performance and the rate performance of the lithium-ion secondary battery.

In some embodiments, $4.0 \text{ g/cm}^3 \leq P \leq 4.3 \text{ g/cm}^3$. In some embodiments, P is 4.0 g/cm$^3$, 4.1 g/cm$^3$, 4.2 g/cm$^3$, 4.3 g/cm$^3$, or in a range defined by any two of these values. P being in the foregoing range is conducive to migration of electrons and ions in the positive electrode, thus improving the cycling performance of the lithium-ion secondary battery.

In some embodiments, $0.16 \text{ g/1540.25 mm}^2 < Q < 0.38 \text{ g/1540.25 mm}^2$. In some embodiments, Q is 0.16 g/1540.25 mm$^2$, 0.18 g/1540.25 mm$^2$, 0.2 g/1540.25 mm$^2$, 0.25 g/1540.25 mm$^2$, 0.28 g/1540.25 mm$^2$, 0.30 g/1540.25 mm$^2$, 0.34 g/1540.25 mm$^2$, 0.36 g/1540.25 mm$^2$, 0.38 g/1540.25 mm$^2$, or in a range defined by any two of these values. Q being in the foregoing range can improve the cycling performance and the rate performance of the lithium-ion secondary battery under the premise of ensuring charge/discharge capacity.

In some embodiments, a mass ratio of the first positive electrode material to the second positive electrode material is 5:1 to 99:1. In some embodiments, the mass ratio of the first positive electrode material to the second positive electrode material is 5:1, 9:1, 10:1, 15:1, 20:1, 25:1, 30:1, 35:1, 40:1, 45:1, 50:1, 55:1, 60:1, 65:1, 70:1, 75:1, 80:1, 85:1, 90:1, 95:1, 99:1, or in a range defined by any two of these values. When the mass ratio of the first positive electrode material to the second positive electrode material is in the foregoing range, the positive electrode includes the first positive electrode material of high concentration, allowing for higher structural stability of the positive electrode. This can alleviate capacity loss and impedance increase caused by damage to the positive electrode material structure, thus maintaining cycling stability and dynamic performance of the lithium-ion battery.

In some embodiments, based on a total mass of the positive electrode material layer, a percentage of the first positive electrode material is 80% to 98%. In some embodiments, based on the total mass of the positive electrode material layer, the percentage of the first positive electrode material is 80%, 82%, 84%, 85%, 88%, 90%, 92%, 94%, 96%, 98%, or in a range defined by any two of these values.

In some embodiments, in an X-ray diffraction spectrum, the second positive electrode material has a characteristic diffraction peak A at 15° to 16° and/or a characteristic diffraction peak B at 18° to 19°, and a ratio $I_A/I_B$ of an intensity $I_A$ of the characteristic diffraction peak A to an intensity $I_B$ of the characteristic diffraction peak B satisfies Formula (3):

$$0 < I_A/I_B \leq 0.2 \qquad \text{Formula (3)}.$$

In some embodiments, the value of $I_A/I_B$ is 0.1, 0.12, 0.14, 0.16, 0.18, 0.2, or in a range defined by any two of these values.

In some embodiments, after the first cycle of charging of the second positive electrode material, in the X-ray diffraction spectrum, the characteristic diffraction peak A and the characteristic diffraction peak B both shift towards lower angles, with a shift magnitude less than 0.5°. In some embodiments, the shift magnitude is 0.1°, 0.2°, 0.3°, 0.4°, 0.45°, or in a range defined by any two of these values.

In some embodiments, the positive electrode material layer includes a conductive agent. In some embodiments, the conductive agent includes at least one of graphite, superconducting carbon, acetylene black, carbon black, Ketjen black, carbon dots, carbon nanotubes, graphene, or carbon nanofiber.

In some embodiments, based on a total mass of the positive electrode material layer, a mass percentage of the conductive agent is 0.5% to 20%. In some embodiments, based on the total mass of the positive electrode material layer, the mass percentage of the conductive agent is 0.5%, 1%, 5%, 8%, 10%, 12%, 14%, 16%, 18%, 20%, or in a range defined by any two of these values.

In some embodiments, the positive electrode material layer includes a binder. In some embodiments, the binder includes at least one of styrene-butadiene rubber (SBR), water-based acrylic resin, carboxymethyl cellulose (CMC), polyvinylidene fluoride (PVDF), polytetrafluoroethylene (PTFE), polyvinyl butyral (PVB), ethylenevinyl acetate copolymer (EVA), or polyvinyl alcohol (PVA).

In some embodiments, based on a total mass of the positive electrode material layer, a mass percentage of the binder is 0.1% to 2.5%. In some embodiments, based on the total mass of the positive electrode material layer, the mass percentage of the binder is 0.1%, 0.2%, 0.5%, 0.8%, 1%, 1.2%, 1.5%, 1.8%, 2%, 2.5%, or in a range defined by any two of these values.

In some embodiments, the positive electrode current collector may be a metal foil or a porous metal plate. In some embodiments, the positive electrode current collector includes a foil or a porous plate of metal such as aluminum, copper, nickel, titanium, or silver or their alloys. In some embodiments, the positive electrode current collector includes at least one of a copper foil or an aluminum foil.

In some embodiments, thickness of the positive electrode current collector is 5 $\mu$m to 20 $\mu$m. In some embodiments, the thickness of the positive electrode current collector is 5$\mu$m, 8$\mu$m, 10$\mu$m, 12$\mu$m, 15$\mu$m, 18$\mu$m, 20$\mu$m, or in a range defined by any two of these values.

In some embodiments, the positive electrode may be obtained by using the following method: mixing the positive electrode active material, the conductive agent, and the binder in a solvent to prepare an active material compound, and applying the active material compound on the current collector. In some embodiments, the solvent may include N-methylpyrrolidone or the like, but is not limited thereto.

The positive electrode provided in this application can fully exert a synergistic effect between the first positive electrode material and the second positive electrode material. During the first cycle of charging, because the second positive electrode material features a high initial charge specific capacity and low initial coulombic efficiency, active lithium loss caused by the formed SEI is effectively compensated for. Thus, during the first discharging, there are enough lithium ions intercalating back into the first positive electrode material, effectively increasing the energy density of the battery. In addition, the first positive electrode material used in this application has a high specific capacity, a small change in volume during charging or discharging, and good cycling stability. Furthermore, the design of the sheet resistance, the compacted density, and the surface density of the positive electrode can further increase the energy density of the lithium-ion secondary battery and improve the rate performance. Therefore, the use of the positive electrode provided in this application allows the lithium-ion secondary battery to have a high energy density, good rate performance, and long cycle life.

It should be noted that the sheet resistance, the compacted density, and the single-side surface density of the positive electrode are key parameters for designing and manufacturing the lithium-ion secondary battery. An excessively large sheet resistance of the positive electrode deteriorates the cycling performance and the rate performance of the lithium-ion secondary battery. An excessively large or small compacted density worsens the cycling performance and the rate performance of the battery. An excessively large single-side surface density of the positive electrode reduces the cycle life of the battery and also affects the infiltration of the electrolyte, thus affecting the rate performance of the battery, especially reducing the discharge capacity of the battery at a high rate. Under the same battery capacity, an excessively small single-side surface density of the positive electrode means increased lengths of the current collector and separator as well as increased ohmic internal resistance of the battery.

In this application, in the case that the positive electrode includes both the first positive electrode material and the second positive electrode material, the comprehensive design of parameters such as the sheet resistance, the compacted density, and the single-side surface density of the positive electrode allows the electrochemical performance of the lithium-ion secondary battery to achieve the expected result.

**2. Electrolyte**

In some embodiments, the electrolyte used in the electrochemical apparatus of this application includes an electrolytic salt and a solvent for dissolving the electrolytic salt. In some embodiments, the electrolyte includes an additive, and the additive includes fluoroethylene carbonate, where based on a total mass of the electrolyte, a percentage of fluoroethylene carbonate is 1% to 15%.

In some embodiments, a percentage of fluoroethylene carbonate is 1%, 2%, 3%, 4%, 5%, 6%, 7%, 8%, 9%, 10%, 11%, 12%, 13%, 14%, 15%, or in a range defined by any two of these values.

In some embodiments, the solvent includes at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), vinyl carbonate (VC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methanesulfonate (EMS), or diethyl sulfone (ESE).

In some embodiments, the electrolyte further includes another additive, which can be arbitrarily used as an additive of the lithium-ion secondary battery. In some embodiments, the another additive may be at least one of vinyl ethylene carbonate (VEC), succinonitrile (SN), adiponitrile (AND), 1,3-propanesultone (PST), sulfonate cyclic quaternary ammonium salt, trimethylsilyl phosphate (TMSP), or trimethylsilyl borate (TMSB).

The electrolytic salt is not particularly limited. In some embodiments, in a case of the lithium secondary battery, the electrolytic salt may include a lithium salt. An example of the electrolytic salt may include but is not limited to lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), or lithium tetrafluoro oxalato phosphate (LiTFOP).

In some embodiments, the concentration of the electrolytic salt is not particularly limited, provided that the effects of this application are not impaired. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte falls within a range defined by any two of the foregoing values. When the concentration of the electrolytic salt falls within the foregoing range, the amount of lithium as charged particles would not be excessively small, and the viscosity can be controlled within an appropriate range, so as to ensure good conductivity.

The foregoing electrolyte may be prepared by using a conventional method in the art. The organic solvent, the electrolytic lithium salt, fluoroethylene carbonate, and the another optional additive may be mixed to uniformity to obtain the electrolyte, where the order of adding the materials is not particularly limited. For example, the electrolytic lithium salt, fluoroethylene carbonate, and the another optional additive may be added into the organic solvent and mixed to uniformity, to obtain the electrolyte. The electrolytic lithium salt may be first added into the organic solvent, and fluoroethylene carbonate and the another optional additive are separately or simultaneously added into the organic solvent.

### 3. Negative electrode

In some embodiments, the negative electrode includes a negative electrode current collector and a negative electrode active substance layer located on one or two surfaces of the negative electrode current collector. The negative electrode active substance layer includes a negative electrode active substance. The negative electrode active substance layer may be one or more layers, and each of the plurality of layers of the negative electrode active substance may include the same or different negative electrode active substances. The negative electrode active substance is any substance capable of reversibly intercalating and deintercalating metal ions such as lithium ions. In some embodiments, a rechargeable capacity of the negative electrode active substance is greater than a discharge capacity of the negative electrode active substance to prevent lithium metal from unexpectedly precipitating onto the negative electrode during charging.

In some embodiments, the negative electrode active substance includes at least one of natural graphite, artificial graphite, a mesocarbon microbead (MCMB), hard carbon, soft carbon, silicon, a silicon-carbon composite, SiO, a Li-Sn alloy, a Li-Sn-O alloy, Sn, SnO, $SnO_2$, spinel-structure lithium titanate $Li_4Ti_5O_{12}$, a Li-Al alloy, or lithium metal. In some embodiments, the negative electrode active substance may be used alone or in combination.

In some embodiments, the negative electrode current collector may be made of a metal foil, a porous metal plate, or the like, for example, a foil or a porous plate of metal such as copper, nickel, titanium, or iron or their alloys such as a copper foil.

In some embodiments, in the case that the negative electrode current collector is made of metal, the negative electrode current collector may take forms including but not limited to a metal foil, a metal cylinder, a metal coil, a metal plate, a metal foil, a sheet metal mesh, a punched metal, a foamed metal, or the like. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, a thickness of the negative electrode current collector is greater than 1 $\mu$m or greater than 5 $\mu$m. In some embodiments, the thickness of the negative electrode current collector is less than 100 $\mu$m or less than 50 $\mu$m. In some embodiments, the thickness of the negative electrode current collector falls within a range defined by any two of the foregoing values.

In some embodiments, the negative electrode active substance layer may further include a negative electrode binder. The negative electrode binder can improve binding between particles of the negative electrode active substance and binding between the negative electrode active substance and the current collector. The type of the negative electrode binder is not particularly limited, provided that its material is stable to the electrolyte or a solvent used in manufacturing of the electrode. In some embodiments, the negative electrode binder includes at least one of styrene-butadiene rubber (SBR), polyvinylidene fluoride (PVDF), polytetrafluoroethylene (PTFE), polyvinyl butyral (PVB), water-based acrylic resin, or carboxymethyl cellulose (CMC).

In some embodiments, the negative electrode active substance layer may further include a thickener. In some embodiments, the thickener includes sodium carboxymethyl cellulose (CMC).

In some embodiments, the negative electrode may be prepared by using the following method: applying a negative electrode mixture slurry including the negative electrode active substance, the resin binder, and the like on the negative electrode current collector, and after drying, and performing rolling to form a negative electrode active substance layer on both sides of the negative electrode current collector, thereby obtaining the negative electrode.

## 4. Separator

In some embodiments, in order to prevent short circuit, a separator is typically provided between the positive electrode and the negative electrode. In this case, the electrolyte of this application typically infiltrates the separator.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or nonwoven fabric-like substance having an excellent fluid retention property, or the like. Examples of the material of the resin or glass fiber separator may include but are not limited to, polyolefin, aromatic polyamide, polytetrafluoroethylene, polyethersulfone, and the like. In some embodiments, the polyolefin is polyethylene or polypropylene. In some embodiments, the polyolefin is polypropylene. The material of the separator may be used alone or in any combination.

The separator may alternatively be a material formed by stacking the foregoing materials, and an example thereof includes but is not limited to, a three-layer separator formed by stacking polypropylene, polyethylene, and polypropylene in order.

Examples of the material of the inorganic substance may include but are not limited to, oxides such as aluminum oxide and silicon dioxide, nitrides such as aluminum nitride and silicon nitride, and sulfates (for example, barium sulfate and calcium sulfate). The form of the inorganic substance may include but is not limited to, a granular or fibrous form.

The form of the separator may be a thin-film form, and examples thereof include but are not limited to, a nonwoven fabric, a woven fabric, and a microporous film. In the thin-film form, the separator has a pore diameter of 0.01 $\mu$m to 1 $\mu$m and a thickness of 5 $\mu$m to 50 $\mu$m. In addition to the standalone thin film-like separator, the following separator may alternatively be used: a separator that is obtained by using a resin-based binder to form a composite porous layer including inorganic particles on the surface of the positive electrode and/or the negative electrode, for example, a separator that is obtained by using fluororesin as a binder to form a porous layer on both surfaces of the positive electrode with alumina particles of which 90% have a particle size less than 1 $\mu$m.

The thickness of the separator is random. In some embodiments, the thickness of the separator is greater than 1 $\mu$m, greater than 5 $\mu$m, or greater than 8 $\mu$m. In some embodiments, the thickness of the separator is less than 50 $\mu$m, less than 40 $\mu$m, or less than 30 $\mu$m. In some embodiments, the thickness of the separator falls within a range defined by any two of the foregoing values. When the thickness of the separator falls within the foregoing range, its insulation performance and mechanical strength can be ensured, and the rate performance and energy density of the electrochemical apparatus can be also ensured.

When a porous material such as a porous sheet or a nonwoven fabric is used as the separator, the porosity of the separator is random. In some embodiments, the porosity of the separator is greater than 10%, greater than 15%, or greater than 20%. In some embodiments, the porosity of the separator is less than 60%, less than 50%, or less than 45%. In some embodiments, the porosity of the separator falls within a range defined by any two of the foregoing values. When the porosity of the separator falls within the foregoing range, its insulation performance the mechanical strength can be ensured and film resistance can be suppressed, so that the electrochemical apparatus has good safety performance.

The average pore diameter of the separator is also random. In some embodiments, the average pore diameter of the separator is less than 0.5 $\mu$m or less than 0.2 $\mu$m. In some embodiments, the average pore diameter of the separator is greater than 0.05 $\mu$m. In some embodiments, the average pore diameter of the separator falls within a range defined by any two of the foregoing values. If the average pore diameter of the separator exceeds the foregoing range, a short circuit is likely to occur. When the average pore diameter of the separator falls within the foregoing range, the electrochemical apparatus has good safety performance.

In some embodiments, the separator is a single-layer or multi-layer thin film made of one or more of glass fiber, non-woven fabric, polyethylene (PE), polypropylene (PP), and polyvinylidene fluoride (PVDF).

## 5. Electrochemical apparatus

The electrochemical apparatus according to this application includes any apparatus in which an electrochemical reaction takes place. Specific examples of the apparatus include all types of primary batteries, secondary batteries, fuel batteries, solar batteries, or capacitors. Especially, the electrochemical apparatus is a lithium secondary battery, including a lithium metal secondary battery or a lithium-ion secondary battery.

This application further provides an electronic apparatus, including the electrochemical apparatus described according to this application.

The electrochemical apparatus of this application is not particularly limited to any purpose, and may be used for any known electronic apparatus in the prior art. In some embodiments, the electrochemical apparatus of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following uses a lithium-ion battery as an example and describes preparation of the lithium-ion battery with reference to specific examples. A person skilled in the art understands that the preparation method described in this application is only an example, and that all other suitable preparation methods fall within the scope of this application.

**Examples**

The following describes performance evaluation performed based on examples and comparative examples of the lithium-ion battery in this application.

I. Preparation of lithium-ion battery

**Example 1**

1. Preparation of positive electrode

First positive electrode material $LiCoO_2$, second positive electrode material $LiMnO_2$, binder PVDF, and conductive carbon black were mixed in a mass ratio of 90.0:7.6:1.3:1.1, and added into a solvent NMP. The foregoing substances were stirred into a uniform transparent system under vacuum, to obtain a positive electrode slurry. The positive electrode slurry was uniformly applied onto a positive electrode current collector aluminum foil and then transferred to an oven for drying at 120°C, followed by cold pressing and slitting, to obtain a positive electrode. Based on a total mass of the positive electrode material layer, a percentage of the first positive electrode material $LiCoO_2$ was 90.0% and a percentage of the second positive electrode material $LiMnO_2$ was 7.6%.

2. Preparation of negative electrode

A negative electrode active material artificial graphite, silicon monoxide, a binder polyacrylic acid (PAA), and conductive carbon black were mixed in a mass ratio of 85.9:10:2.8:1.3%, and added into a deionized water solvent. The foregoing substances were stirred in a vacuum mixer to obtain a negative electrode slurry. The negative electrode slurry was uniformly applied onto a negative electrode current collector copper foil, and transferred into an oven for drying at 120°C, followed by cold pressing and slitting, to obtain a negative electrode.

3. Preparation of electrolyte

Ethylene carbonate (EC), ethyl methyl carbonate (EMC), and diethyl carbonate (DEC) were mixed to uniformity in a volume ratio of 1:1:1, to obtain an organic solvent. $LiPF_6$ was dissolved in the foregoing organic solvent to obtain a base electrolyte, where a concentration of $LiPF_6$ in the base electrolyte was 1 mol/L. Fluoroethylene carbonate was added into the base electrolyte and mixed to uniformity to obtain an electrolyte, where based on a total mass of the electrolyte, a percentage of fluoroethylene carbonate was 5%.

4. Preparation of separator

A polypropylene (PP) film (provided by Celgard) with a thickness of 14 $\mu$m was used as the separator.

5. Preparation of lithium-ion battery

The positive electrode, the separator, and the negative electrode were stacked sequentially, where the separator is sandwiched between the positive electrode and the negative electrode, and were wound into a jelly roll which then was welded with a tab. The jelly roll was placed in a housing, an electrolyte was injected, and sealing was performed, followed by processes such as standing, formation, or shaping, to obtain a lithium-ion secondary battery.

# EP 4 425 597 A1

**Examples 2 to 15**

Examples 2 to 15 were different from Example 1 in the type of the positive electrode material, the relevant performance parameter, and the mass percentage of the additive in the electrolyte. See Table 1 for details.

**Comparative example 1**

Comparative example 1 was different from Example 1 in that the positive electrode material in comparative example 1 included only $LiCoO_2$.

**Comparative example 2**

Comparative example 2 was different from Example 1 in that the positive electrode material in comparative example 2 included only $LiMnO_2$.

**Comparative examples 3 and 4**

Comparative examples 3 and 4 were different from Example 1 in a mass ratio of the first positive electrode material to the second positive electrode material in the positive electrode. See Table 1 for details.

**Comparative examples 5 to 7**

Comparative examples 5 to 7 were different from Example 1 in the sheet resistance, the compacted density, and the single-side surface density of the positive electrode. See Table 1 for details.

**Comparative examples 8 and 9**

Comparative examples 8 and 9 were different from Example 1 in the percentage of fluoroethylene carbonate in the electrolyte. See Table 1 for details.

II. Test methods

1. Test method for a sheet resistance of a positive electrode

A HIOKI BT3562 resistance tester was used to test the sheet resistance of the positive electrode. The test method included clamping the positive electrode between two conductive terminals of the internal resistance tester, applying pressure to fix it, and testing a resistance R of the positive electrode. The diameter of the conductive terminals was 14 mm, the applied pressure was 15 MPa to 27 MPa, and the sampling time range was 5s to 17s.

2. Test method for high-temperature cycling performance of a lithium-ion secondary battery

At 45°C, the lithium-ion secondary battery was constant-current charged to 4.5V at a rate of 1.5C, constant-voltage charged to a current less than or equal to 0.05C, and then constant-current discharged to 3.0 V at a rate of 1C. This was a charge and discharge cycle. A discharge capacity of the lithium-ion secondary battery for the first cycle was recorded. The lithium-ion secondary battery was subjected to charge and discharge recycling according to the foregoing method, a discharge capacity for each cycle was recorded until the discharge capacity of the lithium-ion secondary battery degraded to 80% of a discharge capacity for the first cycle, and the number of charge and discharge cycles was recorded.

3. Test method for rate performance of the lithium-ion secondary battery

At 25°C, the lithium-ion secondary battery was constant-current charged to 4.5 V at a rate of 0.2C, then constant-voltage charged to a current less than or equal to 0.05C, and then constant-current discharged to 3.0 V at a rate of 0.2C. A 0.2C-rate discharge capacity was recorded.

At 25°C, the lithium-ion secondary battery was constant-current charged to 4.5 V at a rate of 0.2C, then constant-voltage charged to a current less than or equal to 0.05C, and then constant-current discharged to 3.0 V at a rate of 2C, to obtain a 2C-rate discharge capacity.

10

2C-rate discharge capacity retention rate (%) of lithium-ion secondary battery=2C-rate discharge capacity/0.2C-rate discharge capacity×100%

III. Test result

Table 1 shows the compositions and relevant performance parameters of the positive electrodes and types and mass percentages of the additives in the electrolytes in Comparative examples 1 to 9 and Examples 1 to 15. The mass percentages of the first and second positive electrode materials were calculated based on the total mass of the positive electrode material layer, and the percentage of fluoroethylene carbonate in the electrolyte was calculated based on the total mass of electrolyte.

Table 1

| No. | First positive electrode material | Percentage of first positive electrode material (wt%) | Second positive electrode material | Percentage of second positive electrode material (wt%) | Sheet resistance R of positive electrode ($\Omega$) | Compacted density P of positive electrode ($g/cm^3$) | Single surface of positive electrode Surface density Q ($g/1540, 25\ mm^2$) | Percentage of fluoroethylene carbonate in electrolyte (wt%) |
|---|---|---|---|---|---|---|---|---|
| Comparative example 1 | $LiCoO_2$ | 97.6 | / | / | 1.2 | 4.2 | 0.26 | 5 |
| Comparative example 2 | / | / | $LiMnO_2$ | 97.6 | 1.2 | 3.4 | 0.26 | 5 |
| Comparative example 3 | $LiCoO_2$ | 97.0 | $LiMnO_2$ | 0.6 | 1.2 | 4.2 | 0.26 | 5 |
| Comparative example 4 | $LiCoO_2$ | 77.6 | $LiMnO_2$ | 20.0 | 1.2 | 4.2 | 0.26 | 5 |
| Comparative example 5 | $LiCoO_2$ | 90.0 | $LiMnO_2$ | 7.6 | 4.0 | 3.8 | 0.16 | 5 |
| Comparative example 6 | $LiCoO_2$ | 90.0 | $LiMnO_2$ | 7.6 | 0.4 | 1.6 | 0.38 | 5 |
| Comparative example 7 | $LiCoO_2$ | 90.0 | $LiMnO_2$ | 7.6 | 1.2 | 4.36 | 0.26 | 5 |
| Comparative example 8 | $LiCoO_2$ | 90.0 | $LiMnO_2$ | 7.6 | 1.2 | 4.2 | 0.26 | 0 |
| Comparative example 9 | $LiCoO_2$ | 90.0 | $LiMnO_2$ | 7.6 | 1.2 | 4.2 | 0.26 | 20 |
| Example 1 | $LiCoO_2$ | 90.0 | $LiMnO_2$ | 7.6 | 1.2 | 4.2 | 0.26 | 5 |
| Example 2 | $LiCo_{0.9}Ni_{0.1}O_2$ | 90.0 | $LiMnO_2$ | 7.6 | 1.2 | 4.2 | 0.26 | 5 |
| Example 3 | $LiCo_{0.9}Ni_{0.05}Mn_{0.05}O_2$ | 90.0 | $LiMnO_2$ | 7.6 | 1.2 | 4.2 | 0.26 | 5 |
| Example 4 | $Li_{0.95}Co_{0.99}Al_{0.01}O_{1.95}F_{0.05}$ | 90.0 | $LiMnO_2$ | 7.6 | 1.2 | 4.2 | 0.26 | 5 |

(continued)

| No. | First positive electrode material | Percentage of first positive electrode material (wt%) | Second positive electrode material | Percentage of second positive electrode material (wt%) | Sheet resistance R of positive electrode ($\Omega$) | Compacted density P of positive electrode (g/cm$^3$) | Single surface of positive electrode Surface density Q (g/1540, 25 mm$^2$) | Percentage of fluoroethylene carbonate in electrolyte (wt%) |
|---|---|---|---|---|---|---|---|---|
| Example 5 | $LiCoO_2$ | 90.0 | $LiMn_{0.9}Ni_{0.1}O_2$ | 7.6 | 1.2 | 4.2 | 0.26 | 5 |
| Example 6 | $LiCoO_2$ | 90.0 | $LiMn_{0.9}Ni_{0.05}Cr_{0.05}O_2$ | 7.6 | 1.2 | 4.2 | 0.26 | 5 |
| Example 7 | $LiCoO_2$ | 90.0 | $Li_{0.95}MnO_{1.95}F_{0.05}$ | 7.6 | 1.2 | 4.2 | 0.26 | 5 |
| Example 8 | $LiCoO_2$ | 90.0 | $Li_{0.95}MnO_{1.9}S_{0.05}F_{0.05}$ | 7.6 | 1.2 | 4.2 | 0.26 | 5 |
| Example 9 | $LiCoO_2$ | 93.6 | $LiMnO_2$ | 4.0 | 1.2 | 4.2 | 0.26 | 5 |
| Example 10 | $LiCoO_2$ | 87.6 | $LiMnO_2$ | 10.0 | 1.2 | 4.2 | 0.26 | 5 |
| Example 11 | $LiCoO_2$ | 90.0 | $LiMnO_2$ | 7.6 | 0.5 | 4.0 | 0.36 | 5 |
| Example 12 | $LiCoO_2$ | 90.0 | $LiMnO_2$ | 7.6 | 1.8 | 4.3 | 0.22 | 5 |
| Example 13 | $LiCoO_2$ | 90.0 | $LiMnO_2$ | 7.6 | 2.4 | 4.1 | 0.34 | 5 |
| Example 14 | $LiCoO_2$ | 90.0 | $LiMnO_2$ | 7.6 | 1.2 | 4.2 | 0.26 | 3 |
| Example 15 | $LiCoO_2$ | 90.0 | $LiMnO_2$ | 7.6 | 1.2 | 4.2 | 0.26 | 15 |

Note: "/" means that the substance is not applicable.

Table 2 shows the high-temperature cycling performance and rate performance of the lithium-ion secondary batteries in Comparative examples 1 to 9 and Examples 1 to 15.

Table 2

| No. | RP/Q | Number of cycles at high temperature | Rate performance (%) |
|---|---|---|---|
| Comparative example 1 | 19.38 | 372 | 94.1 |
| Comparative example 2 | 15.69 | 1 | 81.8 |
| Comparative example 3 | 19.38 | 387 | 93.9 |
| Comparative example 4 | 19.38 | 418 | 86.8 |
| Comparative example 5 | 95.0 | 383 | 91.3 |
| Comparative example 6 | 1.68 | 310 | 92.1 |
| Comparative example 7 | 20.12 | 342 | 92.0 |
| Comparative example 8 | 19.38 | 308 | 93.8 |
| Comparative example 9 | 19.38 | 439 | 93.0 |
| Example 1 | 19.38 | 537 | 93.9 |

(continued)

| No. | RP/Q | Number of cycles at high temperature | Rate performance (%) |
|---|---|---|---|
| Example 2 | 19.38 | 522 | 93.8 |
| Example 3 | 19.38 | 541 | 93.9 |
| Example 4 | 19.38 | 511 | 93.4 |
| Example 5 | 19.38 | 533 | 94.0 |
| Example 6 | 19.38 | 529 | 93.8 |
| Example 7 | 19.38 | 513 | 94.2 |
| Example 8 | 19.38 | 522 | 94.1 |
| Example 9 | 19.38 | 471 | 94.0 |
| Example 10 | 19.38 | 636 | 93.5 |
| Example 11 | 5.56 | 502 | 93.1 |
| Example 12 | 35.18 | 536 | 93.8 |
| Example 13 | 28.94 | 509 | 93.3 |
| Example 14 | 19.38 | 514 | 93.8 |
| Example 15 | 19.38 | 549 | 93.6 |

It can be known from comparison between the foregoing examples and comparative examples that compared with the lithium-ion battery having a positive electrode including only the first positive electrode material or the second positive electrode material, the lithium-ion battery having the positive electrode including both the first positive electrode material and the second positive electrode material shows significant improvement of high-temperature cycling performance but no significant change of the rate performance. Thus, it can be known that the use of both the first positive electrode material and the second positive electrode material can cause a synergistic effect. Without wishing to be bonded by any theory, the synergistic effect may be caused by the following reasons: First, the second positive electrode material used in this application has a small amount of surface free lithium, and adding the second positive electrode material into the positive electrode allows for good stability of the slurry and good processing performance. Second, the second positive electrode material used in this application has a high initial charge specific capacity and low initial coulombic efficiency and therefore can better compensate for active lithium loss caused by SEI formation. During discharge, more lithium ions intercalate back into the first positive electrode material lattices, effectively increasing the energy density of the lithium-ion secondary battery. Third, the first positive electrode material has good cycling performance and a high specific capacity, and as the sheet resistance R, compacted density P, and single-side surface density Q of the positive electrode plate are controlled in the ranges of this application, the lithium-ion secondary battery can have good cycling performance and rate performance.

In addition, it can be seen from the comparison result between Comparative example 7 and Example 1 that fluoroethylene carbonate added into the electrolyte can have a synergistic effect with the positive electrode including both the first positive electrode material and the second positive electrode material. This may be because during the first charge, a large amount of active lithium that deintercalates from the second positive electrode material into the negative electrode, further reducing an actual potential of the negative electrode, causing continuous reduction of the solvent in the electrolyte, and affecting the cycling performance. The use of the additive fluoroethylene carbonate can induce formation of a denser and thinner SEI film, preventing the continuous consumption of the electrolyte. In addition, fluoroethylene carbonate is more resistant to high-voltage oxidation and more suitable for matching with the first positive electrode material at high voltage.

References to "some embodiments", "some of the embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that some embodiments may be changed, replaced, and modified without departing from the spirit, principle, and scope of this application.

**Claims**

1. An electrochemical apparatus, comprising a positive electrode, a negative electrode, and an electrolyte,
   wherein the positive electrode comprises a positive electrode current collector and a positive electrode material layer on at least one surface of the positive electrode current collector, and the positive electrode material layer comprises a first positive electrode material shown in Formula (I):

   $$Li_{1+x}Co_yMe_zM_{1-y-z}O_{2-t}A_t \qquad \text{Formula (I),}$$

   wherein $-0.1<x<0.2$, $0.8<y\leq1$, $0\leq z\leq1$, $0<y+z\leq1$, $0\leq t<0.2$, Me and M each independently comprise at least one of Ni, Mn, Al, Mg, Ti, Zr, La, or Y, Me is different from M, and A comprises at least one of S, N, F, Cl, or Br; and a second positive electrode material shown in Formula (II);

   $$Li_{1+r}Mn_{1-p}X_pO_{2-s}T_s \qquad \text{Formula (II),}$$

   wherein $-0.1<r<0.2$, $0\leq p<0.2$, $0\leq s<0.2$, X comprises at least one of Fe, Co, Ni, Ti, Zn, Mg, Al, V, Cr, or Zr, and T comprises at least one of S, N, F, Cl, or Br; and
   the positive electrode satisfies Formula (1):

   $$2.0\leq R\times P/Q\leq36 \qquad \text{Formula (1),}$$

   wherein R represents a resistance of the positive electrode measured in S2; P represents a compacted density of the positive electrode measured in $g/cm^3$; and Q represents a single-side surface density of the positive electrode measured in $g/1540.25\ mm^2$.

2. The electrochemical apparatus according to claim 1, wherein the positive electrode satisfies Formula (2):

   $$5.0\leq R\times P/Q\leq32 \qquad \text{Formula (2).}$$

3. The electrochemical apparatus according to claim 1, wherein $R\leq3$ S2.

4. The electrochemical apparatus according to claim 1, wherein $4.0\ g/cm^3\leq P\leq4.3\ g/cm^3$.

5. The electrochemical apparatus according to claim 1, wherein $0.16\ g/1540.25\ mm^2<Q<0.38\ g/1540.25\ mm^2$.

6. The electrochemical apparatus according to claim 1, wherein a mass ratio of the first positive electrode material to the second positive electrode material is 5:1 to 99:1.

7. The electrochemical apparatus according to claim 1, wherein based on a total mass of the positive electrode material layer, a percentage of the first positive electrode material is 80% to 98%.

8. The electrochemical apparatus according to claim 1, wherein in an X-ray diffraction spectrum, the second positive electrode material has a characteristic diffraction peak A at 15° to 16° and/or a characteristic diffraction peak B at 18° to 19°, and a ratio $I_A/I_B$ of an intensity $I_A$ of the characteristic diffraction peak A to an intensity $I_B$ of the characteristic diffraction peak B satisfies Formula (3):

   $$0<I_A/I_B\leq0.2 \qquad \text{Formula (3).}$$

9. The electrochemical apparatus according to claim 8, wherein after a first cycle of charging of the second positive electrode material, in the X-ray diffraction spectrum, the characteristic diffraction peak A and the characteristic diffraction peak B both shift towards lower angles, with a shift magnitude less than 0.5°.

10. The electrochemical apparatus according to claim 1, wherein the first positive electrode material comprises at least one of $LiCoO_2$, $LiCo_{0.9}Ni_{0.1}O_2$, $LiCo_{0.9}Ni_{0.05}Mn_{0.05}O_2$, or $Li_{0.95}Co_{0.99}Al_{0.01}O_{1.95}F_{0.05}$; and/or the second positive electrode material comprises at least one of $LiMnO_2$, $LiMn_{0.9}Ni_{0.1}O_2$, $LiMn_{0.9}Ni_{0.05}Cr_{0.05}O_2$, $Li_{0.95}MnO_{1.95}F_{0.05}$, or $Li_{0.95}MnO_{1.9}S_{0.05}F_{0.05}$.

11. The electrochemical apparatus according to claim 1, wherein the electrolyte comprises fluoroethylene carbonate, wherein based on a total mass of the electrolyte, a percentage of fluoroethylene carbonate is 1% to 15%.

12. An electronic apparatus, comprising the electrochemical apparatus according to any one of claims 1 to 11.

After charging

Initial state

Intensity

Angle

FIG. 1

Intensity

Angle

FIG. 2

## INTERNATIONAL SEARCH REPORT

| International application No. |
| --- |
| **PCT/CN2022/075971** |

**A. CLASSIFICATION OF SUBJECT MATTER**

H01M 4/131(2010.01)i; H01M 4/1315(2010.01)i; H01M 10/052(2010.01)i

According to International Patent Classification (IPC) or to both national classification and IPC

**B. FIELDS SEARCHED**

Minimum documentation searched (classification system followed by classification symbols)

H01M4/-; H01M10/-

Documentation searched other than minimum documentation to the extent that such documents are included in the fields searched

Electronic data base consulted during the international search (name of data base and, where practicable, search terms used)

CNPAT, CNKI, WPI, EPODOC: 宁德新能源, 宁德时代, 正极, 阳极, 阴极, 电阻, 密度, 锂, 钴, 氧, 锰, 面密度, Li, Co, O, LiCoO2, LiMnO2, positive w electrode, areal, surface, resistance, pack+, compact+, density

**C. DOCUMENTS CONSIDERED TO BE RELEVANT**

| Category* | Citation of document, with indication, where appropriate, of the relevant passages | Relevant to claim No. |
| --- | --- | --- |
| X | CN 110265627 A (NINGDE CONTEMPORARY AMPEREX TECHNOLOGY CO., LTD.) 20 September 2019 (2019-09-20) description, paragraphs 0002, 0004-0014, 0019-0047, 0085, and 0130 | 1-12 |
| A | CN 1458705 A (SAMSUNG SDI CO., LTD.) 26 November 2003 (2003-11-26) entire document | 1-12 |
| A | CN 102569878 A (SONY CORP.) 11 July 2012 (2012-07-11) entire document | 1-12 |
| A | US 2011053004 A1 (SARUWATARI HIDESATO et al.) 03 March 2011 (2011-03-03) entire document | 1-12 |
| A | US 6551746 B1 (DANIONICS AS.) 22 April 2003 (2003-04-22) entire document | 1-12 |
| A | CN 106463768 A (HITACHI CHEMICAL CO., LTD.) 22 February 2017 (2017-02-22) entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 July 2022** | **20 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/075971**

| Patent document cited in search report | | | Publication date (day/month/year) | Patent family member(s) | | | Publication date (day/month/year) |
|---|---|---|---|---|---|---|---|
| CN | 110265627 | A | 20 September 2019 | WO | 2020063371 | A1 | 02 April 2020 |
| | | | | EP | 3680965 | A1 | 15 July 2020 |
| | | | | US | 2020388829 | A1 | 10 December 2020 |
| | | | | CN | 110265627 | B | 29 September 2020 |
| | | | | US | 11196041 | B2 | 07 December 2021 |
| CN | 1458705 | A | 26 November 2003 | US | 2003211235 | A1 | 13 November 2003 |
| | | | | KR | 20030088247 | A | 19 November 2003 |
| | | | | JP | 2003331845 | A | 21 November 2003 |
| | | | | US | 2009098278 | A1 | 16 April 2009 |
| | | | | US | 8123820 | B2 | 28 February 2012 |
| | | | | KR | 10437340 | B1 | 25 June 2004 |
| | | | | JP | 4524339 | B2 | 18 August 2010 |
| | | | | CN | 1458705 | B | 28 April 2010 |
| | | | | US | 7445871 | B2 | 04 November 2008 |
| CN | 102569878 | A | 11 July 2012 | JP | 2012142156 | A | 26 July 2012 |
| | | | | US | 2012164533 | A1 | 28 June 2012 |
| | | | | US | 9077036 | B2 | 07 July 2015 |
| | | | | CN | 102569878 | B | 14 December 2016 |
| US | 2011053004 | A1 | 03 March 2011 | JP | 2011071103 | A | 07 April 2011 |
| | | | | US | 2017187038 | A1 | 29 June 2017 |
| | | | | US | 9843044 | B2 | 12 December 2017 |
| | | | | JP | 2013080726 | A | 02 May 2013 |
| | | | | JP | 5341837 | B2 | 13 November 2013 |
| | | | | JP | 5646661 | B2 | 24 December 2014 |
| | | | | US | 9634328 | B2 | 25 April 2017 |
| US | 6551746 | B1 | 22 April 2003 | WO | 9953556 | A1 | 21 October 1999 |
| | | | | EP | 1070359 | A1 | 24 January 2001 |
| CN | 106463768 | A | 22 February 2017 | WO | 2015190481 | A1 | 17 December 2015 |
| | | | | US | 2017110715 | A1 | 20 April 2017 |
| | | | | EP | 3157089 | A1 | 19 April 2017 |
| | | | | JP | WO201519048 | A1 | 20 April 2017 |
| | | | | JP | 6213675 | B2 | 18 October 2017 |
| | | | | CN | 106463768 | B | 05 January 2021 |

Form PCT/ISA/210 (patent family annex) (January 2015)